# FASCICULE DE BREVET EUROPEEN

(11) **EP 1 949 196 B1**
(45) Date de publication et mention de la délivrance du brevet: **16.12.2009**
(21) Numéro de dépôt: 06820327.2
(22) Date de dépôt: 19.10.2006
(51) Int. Cl.: G05D 1/00

(54) **PROCEDE ET SYSTEME DE LIMITATION D'UN ANGLE DE BRAQUAGE DE LA GOUVERNE D'UN AERONEF**
VERFAHREN UND SYSTEM ZUM BEGRENZEN EINES FLUGZEUG-STEUEROBERFLÄCHEN-LENKWINKELS
METHOD AND SYSTEM FOR LIMITING AN AIRCRAFT CONTROL SURFACE STEERING ANGLE

(30) Priorité: 27.10.2005 FR 0553267
(43) Date de publication de la demande: 30.07.2008
(73) Titulaire: AIRBUS France, 31060 Toulouse Cedex 9 (FR)
(72) Inventeur: AVERSENG, Didier, F-31700 Blagnac (FR)
(74) Mandataire: Lebrette, Camille
(86) Numéro de dépôt international: PCT/FR2006/051071
(87) Numéro de publication internationale: WO 2007/048960

(56) Documents cités:
- EP-A- 0 488 428
- EP-A- 1 256 863

## Description

### Domaine de l'invention

L'invention concerne un procédé pour limiter l'angle de braquage de la gouverne d'un aéronef dans certaines conditions de vol, notamment lorsque l'aéronef est en dérapage et qu'un braquage de sa gouverne est commandé avec un débattement maximum. L'invention concerne également un système pour mettre en oeuvre ce procédé.

L'invention trouve des applications dans le domaine de l'aéronautique et, en particulier, dans le domaine de la commande de la gouverne d'un aéronef.

### Etat de la technique

Le document EP0488428 représente un procédé et un système conventionnels de limitation d'un angle de braquage de la gouverne d'un aéronef.

Dans un aéronef, la gouverne de direction est un volet mobile monté dans la dérive de l'aéronef et manoeuvré depuis le poste de pilotage pour modifier la direction de l'aéronef. La dérive constitue une surface relativement importante de l'aéronef dont le rôle essentiel est d'assurer une stabilité de route à l'aéronef. La dérive est apte à supporter des efforts qui peuvent être relativement importants. Toutefois, ces efforts ne doivent pas dépasser une certaine charge qui entraînerait la rupture de la dérive. Ces efforts dépendent des conditions de vol de l'aéronef et, notamment, de la vitesse de l'aéronef. Aussi, pour limiter ces efforts sur la dérive, il existe un système, installé sur la plupart des aéronef, permettant de limiter le braquage de la gouverne dans certaines conditions de vol, c'est-à-dire de limiter le débattement autorisé de la gouverne. Cette limitation est obtenue grâce à des butées situées de part et d'autre de la gouverne et dont la position est contrôlée au moyen de vérins. la limitation de l'angle de braquage de la gouverne est directement liée à la vitesse de l'aéronef. Ainsi, plus l'aéronef navigue vite et plus le débattement de la gouverne est réduit, donc plus les butées sont proches de la gouverne. Au contraire, plus la vitesse de l'aéronef est faible, plus l'angle de braquage autorisé est élevé, donc plus les butées sont éloignées de la gouverne.

Dans des conditions normales de vol d'un aéronef, la gouverne de direction est utilisée à l'atterrissage, pour l'alignement de l'aéronef avec la piste d'atterrissage, et au roulage au sol de l'aéronef. Dans ces deux cas, l'aéronef est à faible vitesse. L'angle de braquage autorisé de la gouverne peut donc être élevé.

Dans des conditions anormales de vol d'un aéronef, par exemple lors d'une panne moteur, la gouverne de direction peut être utilisée pour compenser la dissymétrie qui s'installe au moment de la perte de rendement d'un moteur. En effet, lorsqu'un moteur cesse de fonctionner, l'aéronef se met en dérapage et navigue de travers, c'est-à-dire que l'aéronef n'est plus dans l'axe de vol. Il est alors nécessaire d'agir sur la gouverne de direction pour ramener l'aéronef dans cet axe de vol. Dans ces conditions, il est important que le débattement autorisé de la gouverne soit suffisamment élevé pour permettre ce redressement de l'aéronef.

Le système classique de limitation de l'angle de braquage de la gouverne est prévu pour que le pilote puisse compenser les effets d'une telle panne de moteur. Autrement dit, la limitation classique est calculée de manière à laisser au pilote une autorité suffisante pour pouvoir compenser une dissymétrie générée par une panne de moteur.

Cependant, ce système classique ne prend pas en compte d'autres situations anormales qui peuvent nécessiter des commandes de braquage de la gouverne.

En effet, rien n'empêche le pilote d'émettre successivement plusieurs commandes de braquage de la gouverne, dans des sens opposés, avec des angles atteignant le débattement maximum autorisé. Par exemple, si le pilote commande un premier braquage de la gouverne dans un premier sens, pour une première raison, puis un second braquage de la gouverne dans le sens opposé, pour une autre raison, puis un troisième braquage de la gouverne dans le premier sens, avec des angles de braquage maximum, alors les efforts qui portent sur la dérive peuvent devenir si importants que la structure de l'aéronef en est ébranlée.

Dans un autre exemple de conditions anormales de vol, si l'aéronef se met en dérapage, suite à une commande de braquage de la gouverne ou à une panne moteur, l'aéronef navigue de travers. Il a alors le vent de profil. Si, à ce moment, le pilote commande un braquage de la gouverne avec un angle maximum, pour récupérer l'axe de vol, alors la gouverne se retrouve en plein dans le vent. Les contraintes commencent à peser lourdement sur la gouverne. Si le pilote commande un nouveau braquage de la gouverne, dans le sens opposé, avec un angle maximum, alors les efforts pesant sur la dérive peuvent dépasser les charges pour lesquelles l'aéronef a été calculé.

Les efforts portés par la dérive peuvent alors atteindre et même dépasser les limites imposées par la construction elle-même de l'aéronef. Dans les cas les plus graves, la dérive peut se rompre sous l'effet des efforts, ou contraintes, et entraîner le crash de l'aéronef.

### Exposé de l'invention

L'invention a justement pour but de remédier aux inconvénients des techniques exposées précédemment. A cette fin, l'invention propose un procédé et un système permettant d'augmenter la sécurité de l'aéronef en empêchant ce type de manoeuvres, c'est-à-dire une succession de braquages de la gouverne, dans des sens opposés, à des angles de braquage maximum. Pour cela, le procédé et le système de l'invention assurent une limitation de l'angle de braquage autorisé de la gouverne, dans certaines conditions de vol. En d'autres termes, l'invention propose de diminuer l'autorité de commande de la gouverne offerte au pilote pour limiter les efforts sur la dérive lorsque l'aéronef est en dérapage et qu'un braquage de la gouverne est commandé dans le sens opposé jusqu'à l'angle maximum autorisé.

De façon plus précise, l'invention concerne un procédé de limitation de l'angle de braquage d'une gouverne d'un aéronef, comportant une opération de détermination d'un angle de braquage maximum autorisé en fonction de la vitesse de l'aéronef, **caractérisé en ce qu**'il comporte les opérations de :
- détection d'une configuration de dérapage de l'aéronef suivie d'une première commande de braquage de la gouverne avec un angle de braquage maximum et un premier sens,
- application d'une limitation de l'angle de braquage maximum autorisé.

Ce procédé peut comporter une ou plusieurs des caractéristiques suivantes :
- la détection d'une configuration de dérapage de l'aéronef consiste à détecter un braquage de la gouverne avec un angle de braquage maximum et un second sens, opposé au premier sens,
- la détection d'une configuration de dérapage de l'aéronef consiste à détecter une accélération latérale non nulle de l'aéronef.

L'invention concerne également un système pour mettre en oeuvre ce procédé. Ce système est un système de limitation de l'angle de braquage d'une gouverne d'un aéronef, comportant :
- un dispositif d'acquisition de la vitesse de l'aéronef,
- un dispositif de détermination d'un angle de braquage maximum autorisé en fonction de la vitesse de l'aéronef,
- un dispositif d'acquisition de la position courante de la gouverne,
**caractérisé en ce qu**'il comporte :
- un dispositif pour détecter une configuration de dérapage de l'aéronef et une commande de braquage de la gouverne avec un angle de braquage maximum autorisé et un premier sens, et
- un dispositif pour limiter la valeur de l'angle de braquage maximum autorisé.

Ce système peut comporter une ou plusieurs des caractéristiques suivantes
- le dispositif pour détecter un dérapage est un circuit logique vérifiant si deux braquages successifs de la gouverne, appelés doublet, ont des sens opposés et des angles de braquage maximum autorisés.
- le dispositif pour détecter un dérapage comporte un capteur d'accélération latérale.
- le dispositif pour détecter un dérapage comporte un circuit logique vérifiant l'existence d'une commande de braquage avec un angle de braquage maximum, lorsque l'accélération latérale détectée est non nulle.
- le circuit logique comporte deux voies de détection reliées par une porte ET.
- chaque voie de détection comporte une porte ET, un retardateur et une bascule.
- la limitation de l'angle de braquage maximum autorisé est obtenue par modification d'une longueur d'un vérin formant une butée pour la gouverne.

### Brève description des dessins

La figure 1 représente un circuit logique de détection d'un doublet permettant la détection d'une configuration critique.
La figure 2 représente un diagramme fonctionnel du système de limitation de l'angle de braquage de la gouverne, selon un premier mode de réalisation de l'invention.
La figure 3 représente une variante du système de l'invention.
La figure 4 représente un second mode de réalisation du système de l'invention.

### Description détaillée de modes de réalisation de l'invention

L'invention concerne un procédé et un système permettant de réduire rapidement l'angle de braquage autorisé pour la gouverne, lorsque l'aéronef est en configuration de dérapage et qu'un braquage avec un angle maximum est commandé dans le sens opposé à la position courante de la gouverne, c'est-à-dire à la position dans laquelle se trouve la gouverne lors du dérapage. Cette configuration sera appelée par la suite configuration critique.

L'angle de braquage autorisé correspond au débattement maximum que peut subir la gouverne, en réponse à une commande de braquage. Cet angle est délimité par deux butées situées de part et d'autre de la gouverne. La position de ces butées est imposée par un dispositif appelé RTLU (Rudder Travel Limitation Unit, en termes anglosaxons).

L'invention nécessite donc la détection d'une configuration critique avec la détection d'un dérapage de l'aéronef, la détection de la valeur maximum de la RTLU, à savoir la valeur de l'angle de braquage maximum autorisé et la détection de la valeur de l'angle de braquage en cours correspondant à la position courante de la gouverne. Or, l'information de dérapage de l'aéronef n'est pas une information disponible sur la plupart des aéronefs.

Aussi, pour déterminer l'existence d'un dérapage, l'invention propose de détecter :
- soit l'application de deux ordres successifs de braquage avec débattement maximum dans un sens puis dans l'autre sens,
- soit l'existence d'une accélération latérale de l'aéronef.

Ces deux modes de détection permettent de déduire que l'aéronef est en dérapage.

Plus précisément, le procédé de l'invention consiste à détecter que l'aéronef est en dérapage, avec l'un des modes décrits précédemment, et que la gouverne a atteint son débattement maximum et a changé de sens. Dès que ces deux faits ont été détectés, le procédé de l'invention considère que, par défaut, l'aéronef est dans une configuration critique et qu'il y a un risque possible de dépassement des charges limites. Le procédé de l'invention consiste alors à réduire le débattement maximum autorisé de la gouverne afin de s'assurer que les efforts sur la gouverne ne peuvent pas dépasser la charge limite pour laquelle l'aéronef a été dimensionné. De cette façon, on réduit l'autorité du pilote sur la gouverne et on augmente la sécurité de l'aéronef.

Le procédé qui vient d'être décrit est mis en oeuvre par le système de l'invention. Ce système comporte :
- un dispositif 3 d'acquisition de la vitesse de l'aéronef,
- un dispositif 1 de détermination d'un angle de braquage maximum autorisé en fonction de la vitesse de l'aéronef,
- un dispositif 2 d'acquisition de la position coureante de la gouverne.

Il comporte également un circuit électronique pour détecter une configuration critique et déterminer la valeur limite du débattement de la gouverne, ainsi que des bus de communication qui assurent la liaison entre les différents calculateurs de l'aéronef et le circuit de détection pour fournir, audit circuit, les données, prélevées dans les calculateurs, nécessaires à la détection de la configuration critique.

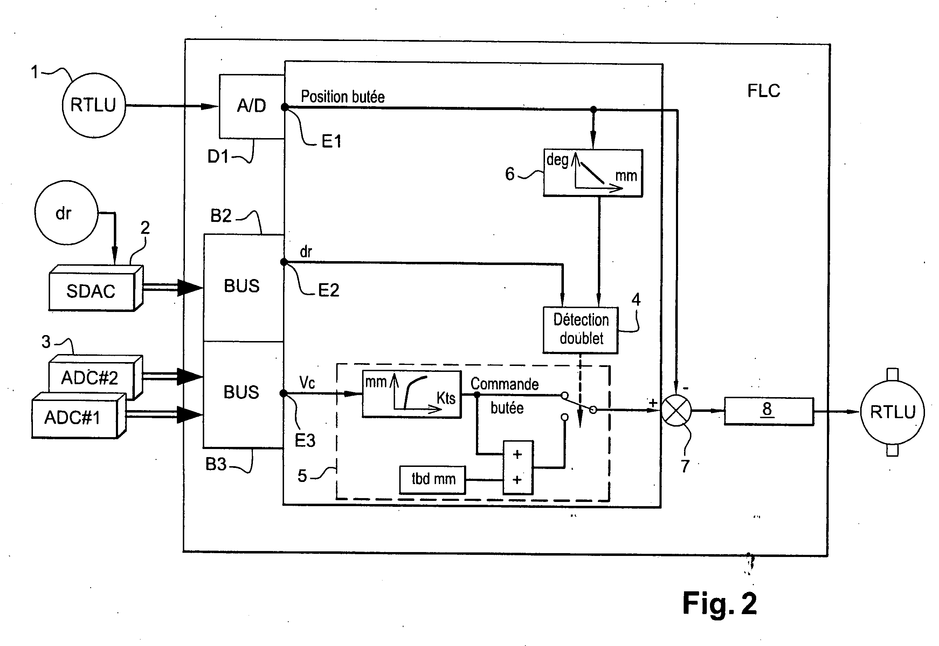

Sur la figure 2, on a représenté un exemple du système de l'invention avec un circuit électronique permettant la détection d'une configuration critique et la limitation de l'angle de braquage de la gouverne. Ce circuit met en oeuvre le premier mode de réalisation de l'invention, dans lequel le dérapage de l'aéronef est déduit de l'application de deux ordres successifs de braquage avec débattement maximum, dans un sens puis dans l'autre sens. Un de ces sens est appelé premier sens, l'autre sens étant appelé second sens. Le circuit de la figure 2 permet donc de détecter deux ordres de braquage successifs, dans des sens opposés, jusqu'à la butée. Pour cela, ce circuit reçoit, à une entrée E1, la position de la butée de la gouverne, c'est-à-dire la valeur de l'angle de braquage maximum autorisé pour la vitesse de vol de l'aéronef. Cette valeur est fournie par l'unité RTLU 1, par exemple sous une forme analogique. Elle est alors convertie en donnée numérique par un démodulateur D1 avant d'être introduite dans le circuit de l'invention. Le circuit reçoit, à une entrée E2, la valeur dr de la position courante de la gouverne, c'est-à-dire la valeur de l'angle entre la position réelle de la gouverne et la position de repos de ladite gouverne. position réelle dans laquelle se trouve la gouverne à l'instant du calcule autrement dit l'angle de braquage de la gouverne. Cette valeur est fournie, via un bus de communication B2 de type ARINC 429, par un calculateur 2 gérant la position de la gouverne, par exemple un concentrateur d'acquisition de données SDAC (System Data Acquisition Concentrator). Le circuit reçoit, à son entrée E3, les informations de vitesse de l'aéronef. Ces informations sont fournies, via un bus B3, par des calculateurs 3 gérant la vitesse de l'aéronef, par exemple des calculateurs ADC (Air Data Computer) ou ADIRU.

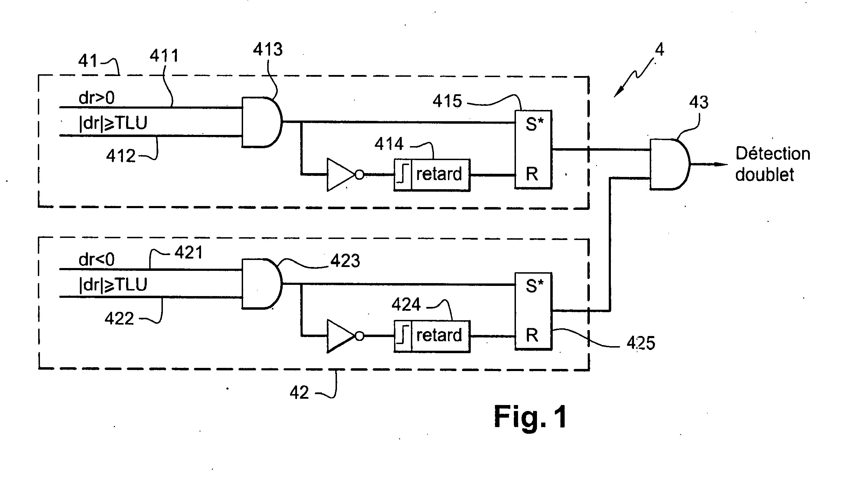

Ce circuit assure une comparaison entre la valeur de la RTLU et la valeur dr de la position courante de la gouverne. Ces deux valeurs sont des valeurs exprimées en degrés. Cette comparaison est réalisée par le circuit de détection de doublet 4, représenté en détail sur la figure 1.

Plus précisément, la figure 1 montre un exemple de circuit logique assurant la détection d'un doublet, c'est-à-dire la détection de deux ordres successifs de braquage de la gouverne avec des débattements maximum et des sens opposés. Ce circuit 4 de détection d'un doublet comporte une première voie de détection 41 et une seconde voie de détection 42. Ces deux voies de détection 41 et 42 sont connectées à une porte Et logique 43.

La première voie 41 comporte une porte ET 413 qui prend la valeur 1 lorsque le sens de braquage dr de la gouverne est positif (entrée 411 du circuit 4) et la valeur absolue du braquage dr est supérieure ou égale à la valeur de la RTLU (entrée 412 du circuit 4). Cette voie 41 comporte un retardateur 414 qui applique un certain retard à la valeur logique obtenue en sortie de la porte ET 413. Ce retard correspond au moins au temps constaté entre l'ordre de braquage de la gouverne et la réaction de la gouverne, c'est-à-dire le changement de position de la gouverne. Ce retard est de l'ordre de 5 à 6 secondes. La voie 41 comporte de plus une bascule 415 qui reçoit, d'une part, la valeur logique directement de la porte ET et, d'autre part, la valeur logique provenant du retardateur 414. Cette bascule 415 permet de verrouiller la valeur logique 1 ou 0 reçue de la porte ET 413. La voie 41 du circuit conserve ainsi la valeur logique obtenue en sortie de la première porte ET 413 pendant ce temps de 5 à 6 secondes pour s'assurer que la gouverne a eu le temps de réagir à l'ordre de braquage.

La voie 41 détecte ainsi l'existence d'un braquage avec un angle maximum et un premier sens.

La seconde voie 42 du circuit de détection de doublet 4 comporte porte ET 423 qui prend la valeur 1 lorsque le sens de braquage dr de la gouverne est négatif (entrée 421 du circuit 4) et la valeur absolue du braquage dr est supérieure ou égale à la valeur de la RTLU (entrée 422 du circuit 4). Cette voie 42 comporte un retardateur 424 qui applique à la valeur logique obtenue en sortie de la porte ET 423 le même retard que le retardateur 414. La voie 42 comporte de plus une bascule 425 qui permet de verrouiller la valeur logique 1 ou 0 reçue de la porte ET 423. La voie 42 du circuit conserve ainsi la valeur logique obtenue en sortie de la première porte ET 423 pendant un temps de 5 à 6 secondes pour s'assurer que la gouverne a eu le temps de réagir à l'ordre de braquage.

La voie 42 détecte ainsi l'existence d'un braquage avec un angle maximum et un second sens.

Chacune des voies 41 et 42 est reliée en sortie à la porte logique ET 43. Lorsque la porte ET 43 reçoit une valeur logique 1 sur chacune de ses entrées, cela signifie que deux ordres de braquage dans des sens opposés et avec des angles maximums ont été détectés. Une valeur logique 1 est émise en sortie du circuit de détection de doublet 4. Dans le cas contraire, une valeur logique 0 est émise en sortie du circuit 4.

Lorsque la sortie de la porte ET 43 est à 1, cela signifie qu'une configuration critique a été détectée. Le circuit de la figure 2 assure alors une restriction de la valeur de la RTLU. Un circuit de commande de la butée 5 associé à un additionneur 7 et à une boucle de puissance 8 assurent la limitation de la valeur de la RTLU, c'est-à-dire l'angle de braquage limité autorisé.

La figure 2 vient d'être décrite en considérant que la valeur de la RTLU est une valeur angulaire fournie directement par l'unité RTLU 1. Cependant, il est à noter que la butée de la gouverne est réalisée au moyen d'un vérin, de type mécanique. En conséquence, l'information fournie par l'unité RTLU 1 est une valeur métrique, par exemple exprimée en millimètres. Le circuit de la figure 2 comporte donc des éléments de conversion des valeurs métriques en valeurs angulaires, en particulier un élément 6 pour convertir les millimètres en degrés. Ainsi, la limitation de l'angle de braquage autorisé correspond à un allongement en millimètres du vérin : plus le vérin est allongé et plus l'angle de braquage autorisé est limité.

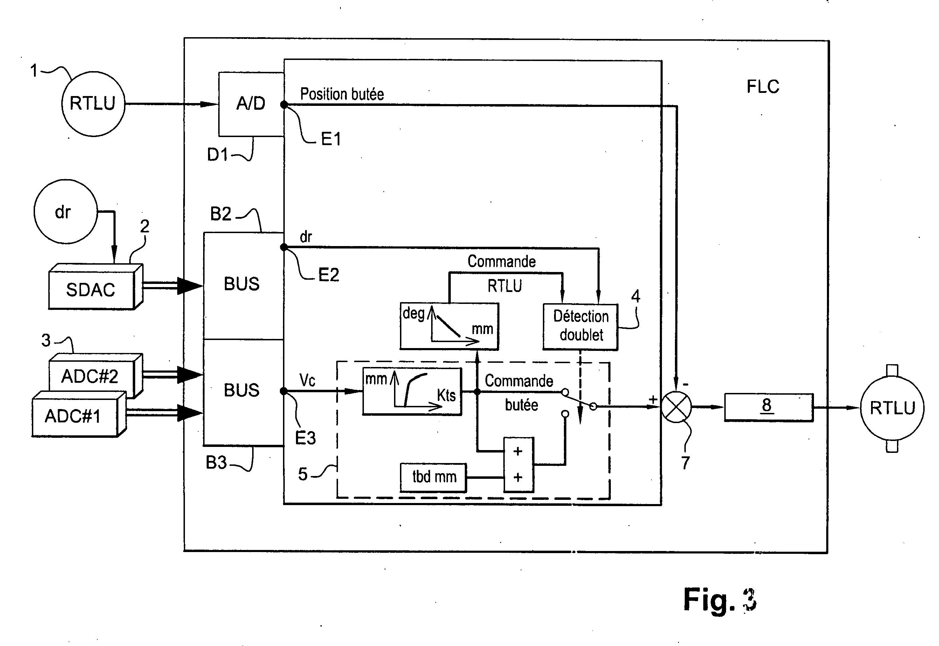

Dans l'exemple de la figure 2, la configuration critique est détectée en comparant des angles de braquage de la gouverne. Sur la figure 3, on a représenté un exemple de circuit permettant de détecter une configuration critique en comparant la position courante de la gouverne et la commande de la position de la RTLU. Autrement dit, avec ce circuit, on n'attend pas que la RTLU soit en place. On utilise directement la commande de la RTLU. Le circuit de détection du doublet 4 reçoit donc en entrée la valeur dr de la position de la gouverne et la valeur de la commande de la RTLU fournie par le circuit de commande de la butée 5.

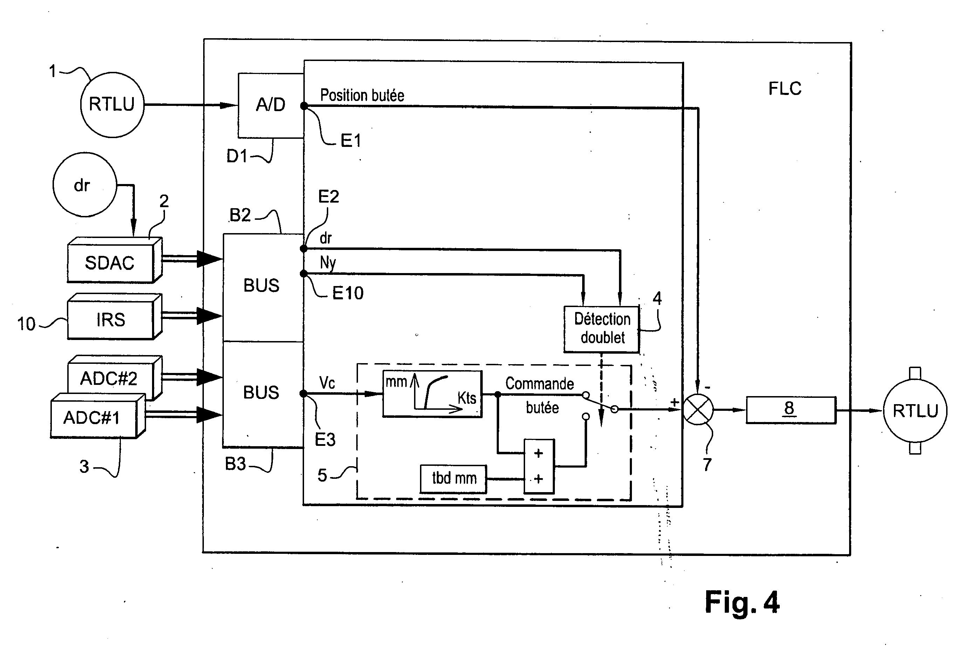

Dans un second mode de réalisation de l'invention, on considère que l'aéronef est en dérapage à partir du moment où il existe une valeur non nulle de son accélération latérale. En effet, sur la plupart des aéronefs, il existe des capteurs de vitesse sur les côtés de l'aéronef. Ces capteurs permettent de détecter la valeur de l'accélération latérale de l'aéronef. Si cette accélération latérale n'est pas nulle, c'est qu'il existe un dérapage. Et si un dérapage est détecté et qu'une commande de la gouverne avec un débattement maximum est aussi détecté, alors l'aéronef est dans une configuration critique. Un exemple d'un circuit permettant de mettre en oeuvre ce mode de réalisation est représenté sur la figure 4.

Ce circuit de la figure 4 est identique à celui de la figure 2, excepté en ce qui concerne certaines données reçues en entrée du circuit et le circuit de détection d'un doublet. Plus précisément, dans ce mode de réalisation, le circuit comporte une entrée E10 recevant la valeur Ny de l'accélération latérale de l'aéronef. Cette valeur Ny est fournie par un calculateur 10 via le bus B2.

Dans ce mode de réalisation, le circuit de détection d'un doublet 4 comporte une première voie qui vérifie si Ny est non nulle et si la gouverne est dans un premier sens et une seconde voie qui vérifie l'existence d'un braquage de la gouverne dans le second sens avec un débattement maximum. Si les valeurs logiques des deux voies sont à 1, alors on considère que l'aéronef est dans une configuration critique.

Quel que soit le mode de réalisation, le système de l'invention peut être implanté dans un calculateur de commande de vol de l'aéronef, par exemple le calculateur FLC (Field Limitation Computer). Ce calculateur FLC présente l'avantage d'assurer notamment la détermination et la commande de la RTLU ; il connaît donc nécessairement la valeur de la RTLU.

## Revendications

1. - Procédé de limitation de l'angle de braquage d'une gouverne d'un aéronef, comportant une opération de détermination d'un angle de braquage maximum autorisé en fonction de la vitesse de l'aéronef, **caractérisé en ce qu'**il comporte les opérations de :
- détection d'une configuration de dérapage de l'aéronef suivie d'une première commande de braquage de la gouverne avec un angle de braquage maximum et un premier sens,
- application d'une limitation de l'angle de braquage maximum autorisé.

2. - Procédé selon la revendication 1, **caractérisé en ce que** la détection d'une configuration de dérapage de l'aéronef consiste à détecter un braquage de la gouverne avec un angle de braquage maximum et un second sens.

3. - Procédé selon la revendication 1, **caractérisé en ce que** la détection d'une configuration de dérapage de l'aéronef consiste à détecter une accélération latérale non nulle de l'aéronef.

4. - Système de limitation de l'angle de braquage d'une gouverne d'un aéronef, comportant :
- un dispositif (3) d'acquisition de la vitesse de l'aéronef,
- un dispositif (1) de détermination d'un angle de braquage maximum autorisé en fonction de la vitesse de l'aéronef,
- un dispositif (2) d'acquisition de la position courante de la gouverne,
**caractérisé en ce qu'**il comporte :
- un dispositif (4) pour détecter une configuration de dérapage de l'aéronef et une commande de braquage de la gouverne avec un angle de braquage maximum autorisé et un premier sens, et
- un dispositif (5) pour limiter la valeur de l'angle de braquage maximum autorisé.

5. - Système selon la revendication 4, **caractérisé en ce que** le dispositif pour détecter un dérapage est un circuit logique vérifiant si deux braquages successifs de la gouverne ont des sens opposés et des angles de braquage maximum autorisés.

6. - Système selon la revendication 4, **caractérisé en ce que** le dispositif pour détecter un dérapage comporte un capteur d'accélération latérale.

7. - Système selon la revendication 6, **caractérisé en ce que** le dispositif pour détecter un dérapage comporte un circuit logique vérifiant l'existence d'une commande de braquage avec un angle de braquage maximum, lorsque l'accélération latérale détectée est non nulle.

8. - Système selon l'une quelconque des revendications 5 à 7, **caractérisé en ce que** le circuit logique comporte deux voies de détection reliées par une porte ET.

9. - Système selon l'une quelconque des revendications 4 à 8, **caractérisé en ce que** la limitation de l'angle de braquage maximum autorisé est obtenue par modification d'une longueur d'un vérin formant une butée pour la gouverne.

10. - Aéronef, **caractérisé en ce qu'**il comporte un système de limitation de l'angle de braquage de la gouverne selon l'une quelconque des revendications 4 à 9.

## Claims

1. A method for limiting an aircraft control surface steering angle, including an operation for determining a maximum authorized steering angle based on the aircraft speed, **characterized in that** it includes operations for:
- detecting a side-slip configuration of the aircraft followed by a first steering control of the control surface with a maximum steering angle and in a first direction,
- applying a limitation of the maximum authorized steering angle.

2. A method according to claim 1, **characterized in that** the detection of a side-slip configuration of the aircraft consists of detecting control surface steering with a maximum steering angle and in a second direction.

3. A method according to claim 1, **characterized in that** the detection of a side-slip configuration of the aircraft consists of detecting a non-zero lateral acceleration of the aircraft.

4. A system for limiting an aircraft control surface steering angle, comprising:
- a device (3) for acquiring the aircraft speed,
- a device (1) for determining a maximum authorized steering angle based on the aircraft speed,
- a device (2) for acquiring the current position of the control surface, **characterized in that** it includes:
- a device (4) for detecting a side-slip configuration of the aircraft and a first steering control of the control surface with a maximum authorized steering angle and in a first direction, and
- a device (5) for limiting the value of the maximum authorized steering angle.

5. A system according to claim 4, **characterized in that** the device for detecting a side-slip is a logical circuit verifying whether two successive control surface steering actions have opposite directions and are within the maximum authorized steering angles.

6. A system according to claim 4, **characterized in that** the device for detecting a side-slip includes a lateral acceleration sensor.

7. A system according to claim 6, **characterized in that** the device for detecting a side-slip includes a logical circuit verifying the existence of a steering control with a maximum steering angle, when the detected lateral acceleration is not zero.

8. A system according to any of claims 5 to 7, **characterized in that** the logical circuit includes two detection channels connected by an AND gate.

9. A system according to any of claims 4 to 8, **characterized in that** the limitation of the maximum authorized steering angle is obtained by modifying the length of a cylinder forming a stop for the control surface.

10. An aircraft, **characterized in that** it comprises a system for limiting the control surface steering angle according to any of claims 4 to 9.

## Patentansprüche

1. Verfahren zum Begrenzen des Lenkeinschlagwinkels eines Steuerruders eines Luftfahrzeugs, mit einem Vorgang zur Bestimmung eines maximal zulässigen Lenkeinschlagwinkels in Abhängigkeit von der Geschwindigkeit des Luftfahrzeugs, **dadurch gekennzeichnet, dass** es die folgenden Vorgänge enthält:
- Erfassung einer Seitenrutschkonfiguration des Luftfahrzeugs, gefolgt von einem ersten Lenkeinschlagbefehl des Steuerruders mit einem maximalen Lenkeinschlagwinkel und einer ersten Richtung,
- Anwendung einer maximal zulässigen Lenkeinschlagwinkelbegrenzung.

2. Verfahren nach Anspruch 1, **dadurch gekennzeichnet, dass** die Erfassung einer Seitenrutschkonfiguration des Luftfahrzeugs darin besteht, einen Lenkeinschlag des Steuerruders mit einem maximalen Lenkeinschlagwinkel und einer zweiten Richtung zu erfassen.

3. Verfahren nach Anspruch 1, **dadurch gekennzeichnet, dass** die Erfassung einer Seitenrutschkonfiguration des Luftfahrzeugs darin besteht, eine Seitenbeschleunigung ungleich Null des Luftfahrzeugs zu erfassen.

4. System zum Begrenzen des Lenkeinschlagwinkels eines Steuerruders eines Luftfahrzeugs, mit:
- einer Vorrichtung (3) zum Erfassen der Geschwindigkeit des Luftfahrzeugs,
- einer Vorrichtung (1) zum Bestimmen eines maximal zulässigen Lenkeinschlagwinkels in Abhängigkeit von der Geschwindigkeit des Luftfahrzeugs,
- einer Vorrichtung (2) zum Erfassen der jeweiligen Stellung des Steuerruders,
**dadurch gekennzeichnet, dass** sie folgendes enthält:
- eine Vorrichtung (4) zum Erfassen einer Seitenrutschkonfiguration des Luftfahrzeugs und eines Lenkeinschlagbefehls des Steuerruders mit einem maximal zulässigen Lenkeinschlagwinkel und einer ersten Richtung, und
- eine Vorrichtung (5) zur Begrenzung des maximal zulässigen Lenkeinschlagwinkelwertes.

5. System nach Anspruch 4, **dadurch gekennzeichnet, dass** die Vorrichtung zur Erfassung eines Seitenrutsches ein Regelkreis ist, der überprüft, ob zwei aufeinanderfolgende Lenkeinschläge des Steuerruders entgegengesetzte Richtungen und maximal zulässige Lenkeinschlagwinkel aufweisen.

6. System nach Anspruch 4, **dadurch gekennzeichnet, dass** die Vorrichtung zur Erfassung eines Seitenrutsches einen Seitenbeschleunigungssensor enthält.

7. System nach Anspruch 6, **dadurch gekennzeichnet, dass** die Vorrichtung zur Erfassung eines Seitenrutsches einen Regelkreis enthält, der überprüft, ob es einen anstehenden Lenkeinschlagbefehl mit einem maximal zulässigen Lenkeinschlagwinkel gibt, wenn die erfasste Seitenbeschleunigung ungleich Null ist.

8. System nach irgendeinem der Ansprüche 5 bis 7, **dadurch gekennzeichnet, dass** der Regelkreis zwei Erfassungspfade enthält, die durch einen ET Gate miteinander verbunden sind.

9. System nach irgendeinem der Ansprüche 4 bis 8, **dadurch gekennzeichnet, dass** man die Begrenzung des maximal zulässigen Lenkeinschlagwinkels durch die Veränderung einer Zylinderlänge erhält, der für das Steuerruder einen Anschlag bildet.

10. Luftfahrzeug, **dadurch gekennzeichnet, dass** es ein System zum Begrenzen des Lenkeinschlagwinkels des Steuerruders nach irgendeinem der Ansprüche 4 bis 9 enthält.
